# DEMANDE DE BREVET EUROPEEN

(11) **EP 1 547 909 A1**
(43) Date de publication de la demande: **29.06.2005**
(21) Numéro de dépôt: 04293058.6
(22) Date de dépôt: 20.12.2004
(51) Int. Cl.: B62D 29/00, B62D 27/02

(54) **Elément structurel pour véhicule automobile comprenant deux corps métalliques et une pièce de renfort en matière plastique assurant la liaison des corps, et véhicule automobile correspondant**

(30) Priorité: 22.12.2003 FR 0315188
(71) Demandeur: Faurecia Bloc Avant, 92000 Nanterre (FR)
(72) Inventeur: Rivière, Caroline, 25700 Valentigney (FR); Berne, Sébastien, 25200 Montbeliard (FR)
(74) Mandataire: Domenego, Bertrand

(57) **Abrégé**

Cet élément structurel comprend un premier (3) et un deuxième (5) corps métalliques dont des régions (23, 29) se chevauchent et une pièce (7) de renfort en matière plastique surmoulée sur le premier et le deuxième corps métalliques, la pièce de renfort comprenant au moins une partie (45) de liaison des corps métalliques. La région de chevauchement (23) du premier corps (3) comprend au moins un creux d'ancrage (25). La région de chevauchement (29) du deuxième corps (5) comprend au moins une zone discrète (37) en retrait du deuxième corps métallique (5) pour l'accrochage de la matière plastique, et la partie de liaison (45) passe dans la zone en retrait (37) pour être engagée dans le creux d'ancrage (25).

Application, par exemple à la réalisation de faces avant.

## Description

La présente invention concerne un élément structurel pour véhicule automobile du type comprenant :
- un premier et un deuxième corps métalliques distincts et séparés, des régions de chevauchement du premier et du deuxième corps métalliques se recouvrant, et
- une pièce de renfort en matière plastique surmoulée sur le premier et le deuxième corps métalliques, la pièce de renfort comprenant au moins une partie de liaison des corps métalliques.

L'invention s'applique en particulier à la réalisation de faces avant pour véhicules automobiles.

De telles faces avant sont qualifiées d'« hybrides », du fait de l'utilisation combinée de métal et de matière plastique pour les réaliser.

US-2003/0070387 décrit un élément structurel du type précité.

Les parties de liaison sont des rivets, qui font partie de la pièce de renfort en matière plastique, et qui traversent des orifices ménagés dans les régions de chevauchement des corps métalliques.

Un but de l'invention est de fournir un élément structurel utilisant un autre mode de liaison des corps métalliques.

A cet effet, l'invention a pour objet un élément structurel du type précité, caractérisé en ce que la région de chevauchement du premier corps métallique comprend au moins un creux d'ancrage ménagé dans le premier corps métallique pour l'ancrage de la matière plastique, et la région de chevauchement du deuxième corps métallique comprend au moins une zone discrète en retrait d'un bord du deuxième corps métallique pour l'accrochage de la matière plastique, et la partie de liaison passe dans la zone en retrait pour être engagée dans le creux d'ancrage.

Selon des modes particuliers de réalisation, l'élément structurel peut comprendre l'une ou plusieurs des caractéristiques suivantes, prise(s) isolément ou selon toutes les combinaisons techniquement possibles :
- la zone discrète en retrait possède au moins une partie convergeant vers l'extérieur du deuxième corps,
- la zone discrète en retrait a une forme étagée présentant des angles,
- le creux d'ancrage a une section présentant au moins une contre-dépouille,
- le creux d'ancrage a été ménagé par emboutissage du premier corps métallique,
- la zone discrète en retrait et le creux d'ancrage sont disposés au moins partiellement en regard l'une de l'autre, et
- le premier et/ou le deuxième corps métallique comprend des ailes délimitant entre elles une cavité, et la pièce de renfort comprend des nervures s'étendant dans la cavité entre les ailes.

L'invention a également pour objet un véhicule automobile, caractérisé en ce qu'il comprend un élément structurel tel que défini ci-dessus.

L'invention sera mieux comprise à la lecture de la description qui va suivre, donnée uniquement à titre d'exemple, et faite en se référant aux dessins annexés, sur lesquels :
- la figure 1 est une vue schématique en perspective d'une face avant pour véhicule automobile selon l'invention,
- la figure 2 est une vue schématique en perspective agrandie de la traverse métallique supérieure de la face avant,
- la figure 3 est une section schématique, agrandie et en coupe prise suivant le plan III-III de la figure 1 et illustrant la liaison entre la traverse supérieure et un montant métallique de la face avant de la figure 1,
- la figure 4 est une vue analogue à la figure 1, illustrant la face avant de la figure 1 avant surmoulage de la pièce de renfort en matière plastique,
- la figure 5 est une vue schématique agrandie de la partie V de la figure 4, et
- les figures 6 et 7 sont des vues partielles et schématiques illustrant la forme d'encoches des montants de la face avant selon des variantes de l'invention.

Dans tout ce qui suit, les orientations utilisées sont les orientations habituelles d'un véhicule automobile.

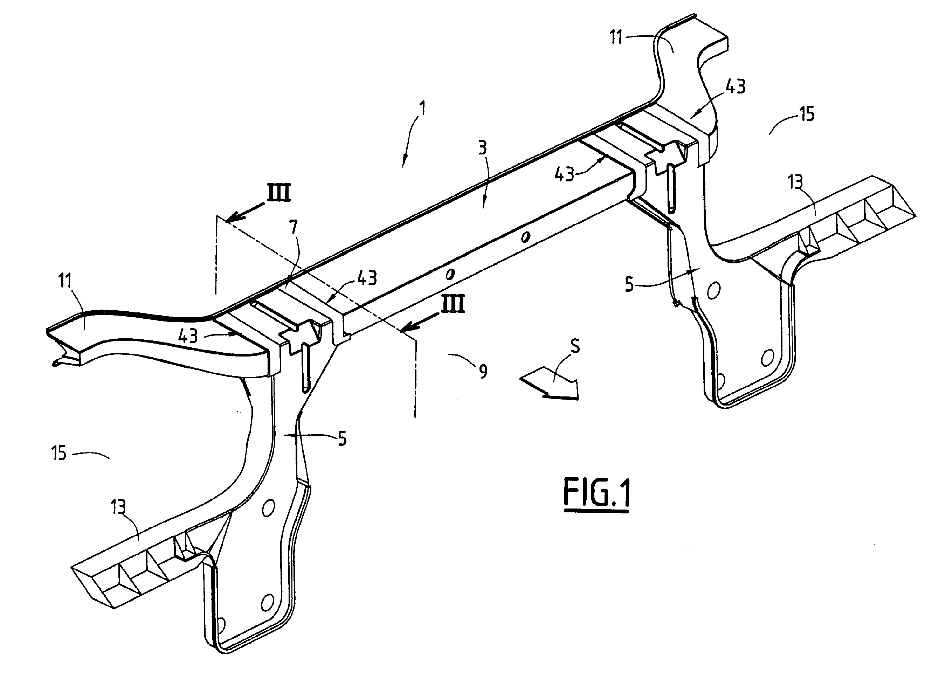

Ainsi, les termes « avant », « arrière », « droite », « gauche », « supérieur » et « inférieur » s'entendent par rapport à la position d'un conducteur et au sens de marche du véhicule automobile, matérialisé par une flèche S sur la figure 1.

La figure 1 représente une face avant 1 qui comprend une traverse métallique supérieure 3 qui s'étend sensiblement horizontalement et deux montants latéraux métalliques 5 qui s'étendent sensiblement verticalement.

Les deux montants latéraux 5 sont espacés latéralement l'un de l'autre et prolongent la traverse supérieure 3 vers le bas.

La face avant 1 comprend en outre une pièce de renfort 7 en matière plastique surmoulée sur la traverse 3 et les montants 5.

Une telle face avant 1 est destinée à être montée à l'avant d'un véhicule automobile pour supporter divers équipements tels que des blocs optiques, un groupe moto-ventilateur (GMV), un radiateur, un condenseur ...

Ainsi, les montants 5 délimitent entre-eux un espace central 9 de réception par exemple d'un radiateur, d'un condenseur et d'un groupe moto-ventilateur.

De même, les extrémités latérales 11 de la traverse 3 délimitent, avec des branches 13 prolongeant les montants 5 latéralement vers l'extérieur, des espaces 15 de réception de blocs optiques.

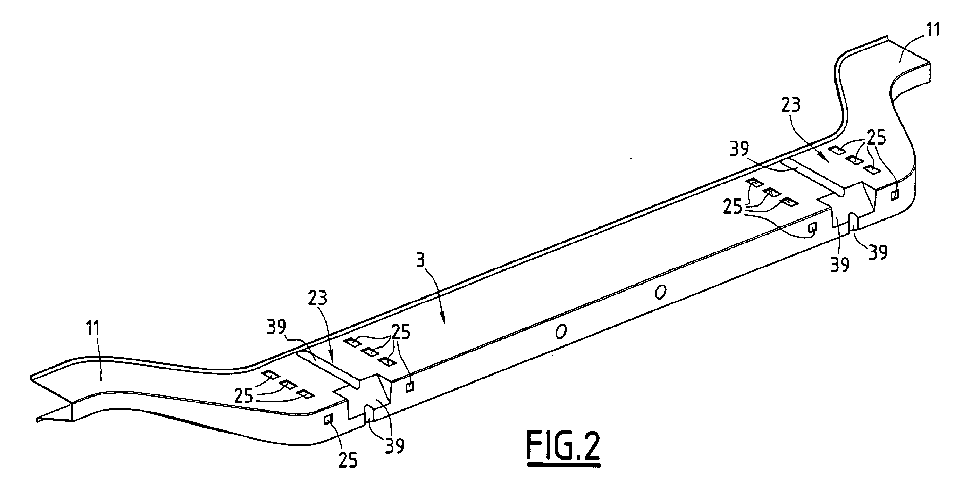

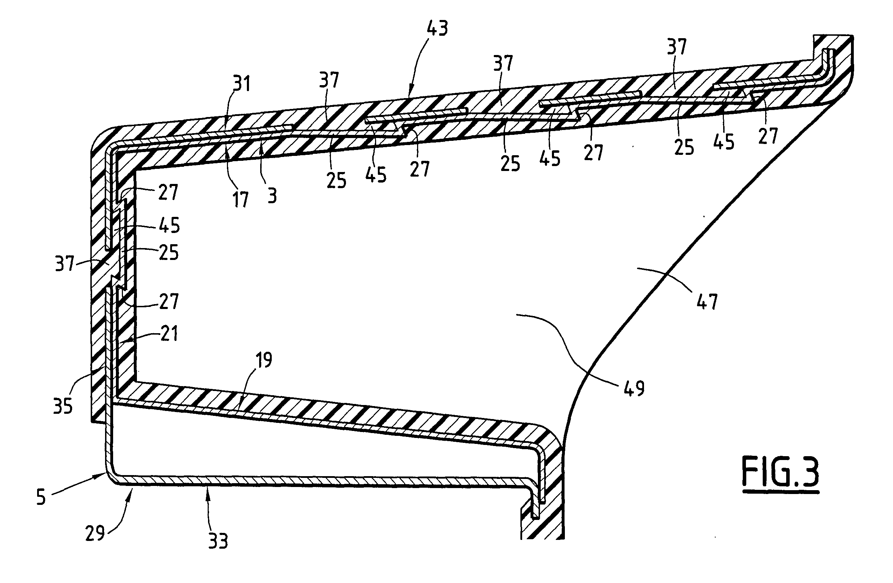

Comme illustré plus particulièrement par les figures 2 et 3, la traverse 3 est un profilé de section verticale sensiblement en V avec une aile supérieure 17, une aile inférieure 19 et un fond 21 disposé à l'avant et reliant les ailes 17 et 19. La section de la traverse 3 est légèrement évasée vers l'arrière.

La traverse supérieure 3 comprend deux régions 23 de chevauchement avec les montants 5. Ces régions 23 sont espacées latéralement l'une de l'autre ainsi que des extrémités latérales 11.

La traverse 3 présente, au-delà de ces régions 23, des décrochements vers l'arrière terminés par les extrémités latérales 11.

Chaque région de chevauchement 23 est bordée latéralement de part et d'autre par une série de creux 25 d'ancrage de la matière plastique. Les creux 25 de chaque série sont situés sensiblement dans un même plan vertical.

Ces creux 25 ont par exemple été réalisés par emboutissage du métal de la traverse 3. On notera que ces creux 25 sont des reliefs non-traversants ménagés dans la traverse 3 et ne sont pas comparables à des orifices.

Comme on le voit sur la figure 3, chaque série comprend trois creux 25 ménagés dans l'aile supérieure 17. Ces creux 25 débouchent vers le haut et ont une section sensiblement triangulaire dont la pointe est orientée vers l'avant. On notera que les côtés arrière 27 des creux 25 forment des marches en contre-dépouille, c'est-à-dire qu'ils sont dans l'exemple représenté inclinés vers le haut et vers l'avant. Les trois creux 25 sont disposés l'un derrière l'autre de manière espacée.

Chaque série comprend en outre un creux 25 ménagé dans le fond 21.

Ce creux 25, qui débouche vers l'avant, a par exemple une section trapézoïdale avec deux côtés 27 opposés en contre-dépouille. Dans l'exemple représenté, les deux côtés 27 convergent donc vers l'avant.

Comme illustré plus particulièrement par les figures 3 à 5, les extrémités supérieures 29 des montants 5 forment des régions de chevauchement des régions 23 de la traverse 3.

Comme on le voit sur la figure 3, ces régions de chevauchement 29 ont également une section verticale sensiblement en V avec une aile supérieure 31, une aile inférieure 33 et un fond 35. Cette section correspond sensiblement à celle de la traverse 3, sauf que le fond 35 est plus haut que le fond 21 et que l'aile inférieure 33 n'est pas inclinée comme l'aile inférieure 19, mais est sensiblement horizontale.

Les montants 5 ont sensiblement des formes symétriques l'une de l'autre par rapport à un plan vertical médian de la face avant 1. Seule la structure du montant 5 droit (à gauche sur les figures 1, 4 et 5) ainsi que sa liaison avec la traverse 3 seront donc décrites par la suite.

L'aile supérieure 31 a une largeur correspondant sensiblement à l'espacement latéral entre les séries d'ouvertures 25 de la région de chevauchement 23 correspondante. Une série de zones en retrait 37 est ménagée dans chaque bord latéral 38 de la région de chevauchement 29. Ces zones en retrait 37 sont des zones discrètes espacées l'une de l'autre et servent, comme on le verra par la suite, à l'accrochage de la matière plastique sur le montant 5. Les zones 37 sont en l'occurrence des encoches de forme trapézoïdale convergeant latéralement vers l'extérieur de la région de chevauchement 29.

Plus précisément, chaque série comprend trois encoches 37 ménagées dans l'aile supérieure 31 et une encoche 37 ménagée dans le fond 35.

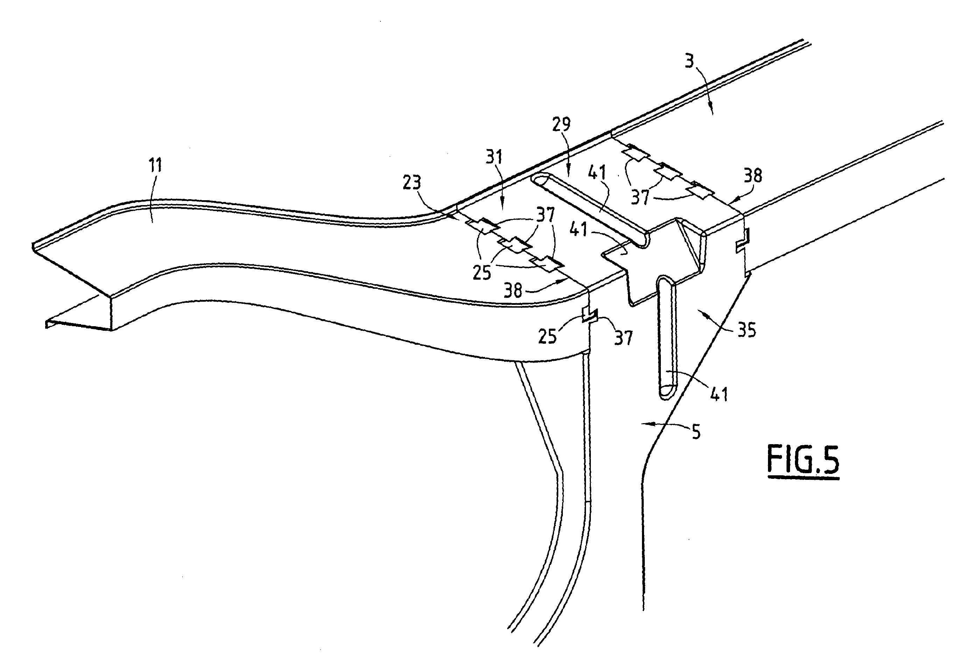

Comme on peut le voir sur les figure 3 et 5, lorsque les régions 23 et 29 se recouvrent, les encoches 37 et les creux 25 sont disposés en regard et communiquent les unes avec les autres. On notera que les creux 25 et les encoches 37 ménagés dans les fonds 21 et 35 ne sont que partiellement en regard.

Les régions de chevauchement 23 et 29 comprennent également des reliefs complémentaires 39 et 41 destinés à s'emboîter les uns dans les autres lorsque la traverse 3 et les montants 5 se chevauchent via leurs régions 23 et 29.

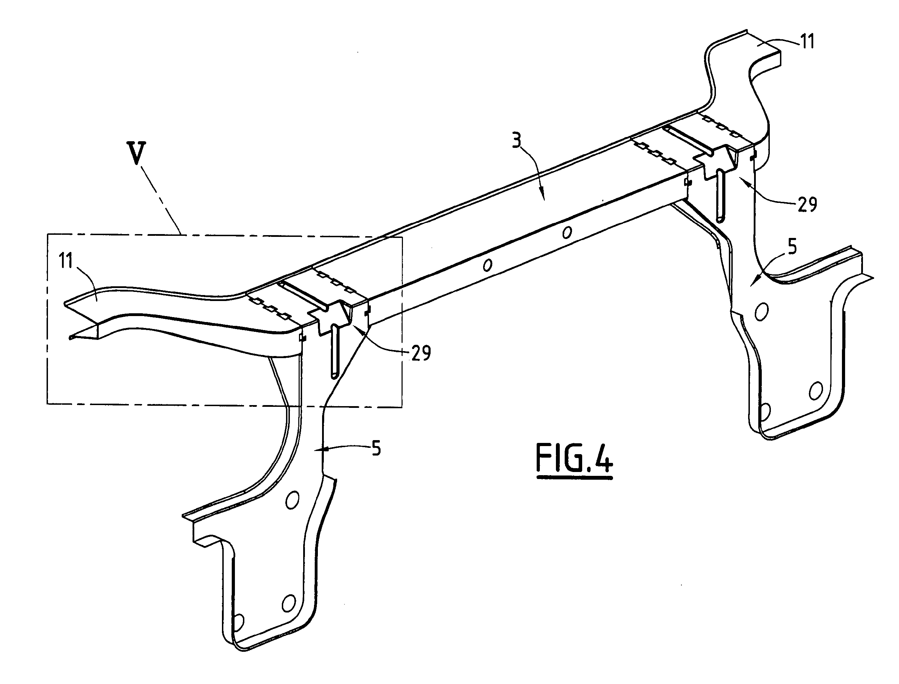

Pour réaliser la face avant 1, on engage les régions 23 de la traverse 3 dans les régions 29 des montants 5 pour que ces régions se recouvrent, comme illustré par la figure 4.

Les ailes supérieures 17 et 31 et les fonds 21 et 35 sont alors appuyés les uns contre les autres. Les reliefs complémentaires 39 et 41 sont engagés les uns dans les autres.

L'ensemble ainsi formé est placé dans un moule où la matière plastique destinée à former la pièce 7 est surmoulée sur la traverse 3 et les montants 5.

Cette matière plastique forme notamment, comme on le voit sur la figure 1, des bandes 43 qui s'étendent le long des bords 38 des régions de chevauchement 29 des montants 5.

Comme illustré par la figure 3, la matière plastique de ces bandes 43 passent dans les encoches 37 et est ancrée dans les creux 25 en formant ainsi des clavettes 45 de liaison des montants 5 et de la traverse 3. Les bandes 43 enveloppent les bords 38 au droit des creux 25 de sorte que certains au moins des côtés des encoches 37 sont noyés dans la matière plastique.

Les clavettes 45 bloquent les mouvements relatifs des montants 5 et de la traverse 3 et retiennent la traverse 3 par rapport au montant 5, notamment grâce à l'ancrage des clavettes 45 dans les creux 25. Cet ancrage est particulièrement satisfaisant du fait des côtés 27 en contre-dépouille. La liaison fournie par les clavettes 45 entre la traverse 3 et les montants 5 est également satisfaisante du fait que des côtés des encoches 37 sont noyés dans la matière plastique assurant ainsi un très bon accrochage de la matière plastique sur les montants 5. En outre, la forme convergeante des encoches 37 améliore encore l'accrochage de la matière plastique sur les montants 5.

La matière plastique de la pièce de renfort 7 forme également un réseau de nervures 47 qui s'étendent dans la cavité 49 délimitée entre les ailes 17 et 19 de la traverse supérieure 3.

Comme on le voit sur la figure 3, où une nervure 47 a été représentée en arrière-plan bien que cette vue soit une section, ces nervures 47 s'étendent de l'aile 17 jusqu'à l'aile 19. De même, la matière plastique va former des réseaux de nervures analogues dans les montants 5. Ces nervures permettent de rigidifier la face avant 1.

La matière plastique de la pièce 7 va également former les branches 13 prolongeant latéralement les montants 5.

Ainsi, la face avant 1 est rigide et présente une bonne tenue mécanique, notamment avec des liaisons satisfaisantes entre les montants 5 et la traverse 3. En outre, la face avant 1 est légère et de coût de réalisation réduit.

En variante, les formes des creux 25 et des encoches 37 peuvent être différentes de celles décrites précédemment.

Ainsi, les encoches 37 n'ont pas nécessairement des formes convergeant vers l'extérieur.

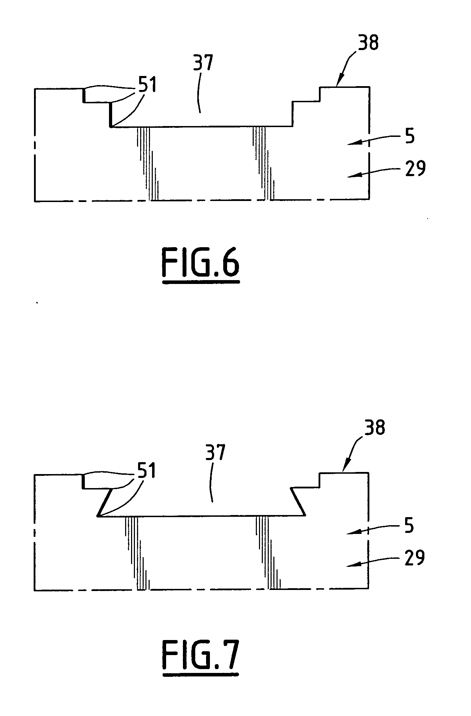

Elles peuvent par exemple présenter des formes étagées avec des angles 51 comme illustré par la figure 6 permettant d'obtenir un bon accrochage de la matière plastique.

La figure 7 illustre encore une autre variante avec une forme étagée dont une partie est convergente.

De même, les creux 25 ne présentent pas nécessairement des contre-dépouilles.

L'invention peut s'appliquer à la réalisation d'éléments structurels autres que des faces avant.

## Revendications

1. Elément structurel (1) pour véhicule automobile, du type comprenant :
- un premier (3) et un deuxième (5) corps métalliques distincts et séparés, des régions de chevauchement (23, 29) du premier et du deuxième corps métalliques se recouvrant,
- une pièce (7) de renfort en matière plastique surmoulée sur le premier et le deuxième corps métalliques, la pièce de renfort comprenant au moins une partie (45) de liaison des corps métalliques,
**caractérisé en ce que** :
- la région de chevauchement (23) du premier corps métallique (3) comprend au moins un creux d'ancrage (25) ménagé dans le premier corps métallique (3) pour l'ancrage de la matière plastique,
- la région de chevauchement (29) du deuxième corps métallique (5) comprend au moins une zone discrète (37) en retrait d'un bord (38) du deuxième corps métallique (5) pour l'accrochage de la matière plastique, et
- la partie de liaison (45) passe dans la zone en retrait (37) pour être engagée dans le creux d'ancrage (25).

2. Elément structurel selon la revendication 1, **caractérisé en ce que** la zone discrète en retrait (37) possède au moins une partie convergeant vers l'extérieur du deuxième corps (5).

3. Elément selon la revendication 1 ou 2, **caractérisé en ce que** la zone discrète en retrait (37) a une forme étagée présentant des angles (51).

4. Elément selon l'une des revendications précédentes, **caractérisé en ce que** le creux d'ancrage (25) a une section présentant au moins une contre-dépouille (27).

5. Elément selon la revendication 4, **caractérisé en ce que** le creux d'ancrage (25) a été ménagé par emboutissage du premier corps métallique (3).

6. Elément selon l'une des revendications précédentes, **caractérisé en ce que** la zone discrète en retrait (37) et le creux d'ancrage (25) sont disposés au moins partiellement en regard l'une de l'autre.

7. Elément selon l'une des revendications précédentes, **caractérisé en ce que** le premier et/ou le deuxième corps métallique (3, 5) comprend des ailes (17, 19, 31, 33) délimitant entre elles une cavité (49), et **en ce que** la pièce de renfort (7) comprend des nervures (47) s'étendant dans la cavité (49) entre les ailes (17, 19).

8. Véhicule automobile, **caractérisé en ce qu'**il comprend un élément structurel selon l'une des revendications précédentes.
